# EUROPEAN PATENT APPLICATION

(11) **EP 2 741 281 A1**
(43) Date of publication of application: **11.06.2014**
(21) Application number: 13196080.9
(22) Date of filing: 06.12.2013
(51) Int. Cl.: G09G 3/36

(54) **Array substrate, driving method, and display device.**

(30) Priority: 10.12.2012 CN 201210530822
(71) Applicant: Boe Technology Group Co. Ltd., Beijing 100015 (CN); Beijing BOE Display Technology Co., Ltd., Beijing 100176 (CN)
(72) Inventor: Duan, Xin, 100176 Beijing (CN)
(74) Representative: Conti, Marco

(57) **Abstract**

The present invention provides an array substrate, a driving method and a display device. The array substrate comprises a plurality of gate lines. A first gate line of the two adjacent gate lines is coupled to a first switch unit and a second gate line is coupled to a second switch unit. The first switch unit and the second switch unit are coupled to a control line, and are coupled to a gate drive output channel. The second switch unit is turned off when the first switch unit is turned on under control of the control line, and the first switch unit is turned off when the second switch is turned on under control of the control line. According to the present invention, it is able to effectively reduce the number of the gate drive ICs and thereby to reduce the cost.

## Description

### TECHNICAL FIELD

Embodiments of the present invention relate to a field of liquid crystal display technology, in particular to an array substrate, a driving method and a display device.

### BACKGROUND

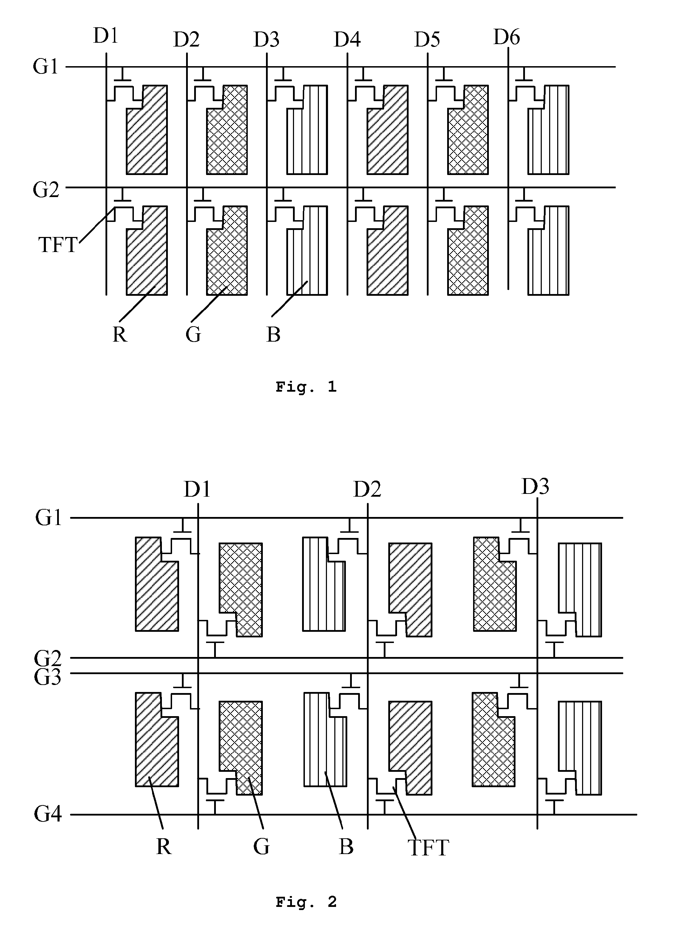

As shown in Figs.1-3, in the drive structure for a traditional liquid crystal panel, each sub-pixel (e.g., sub-pixel R, G or B) corresponds to a source drive line and a gate drive line. The gate drive line transmits, in a row-by-row scanning manner, a threshold voltage to a TFT (Thin Film Transistor) switch in each row, so that a voltage of a corresponding source electrode can be applied to both sides of a liquid crystal.

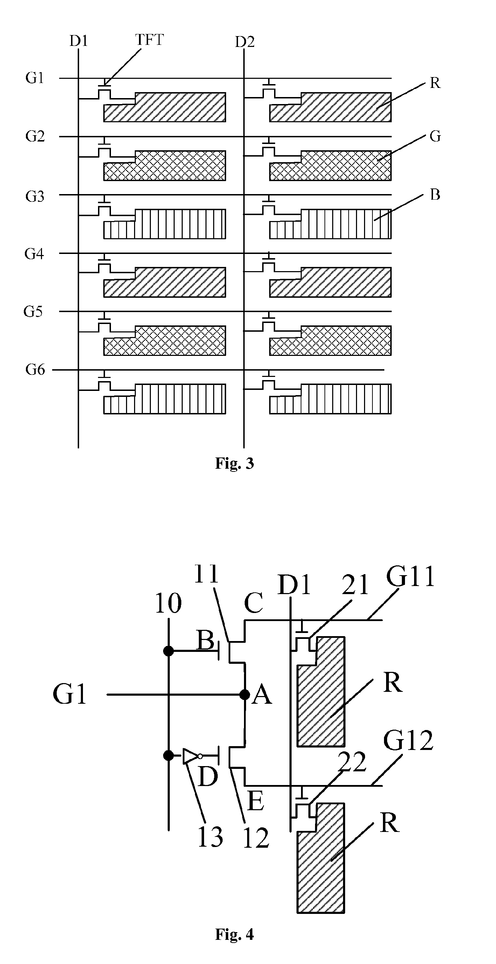

A high-resolution panel may adopt the traditional single-gate drive structure as shown in Fig.1, or the dual-gate drive structure as shown in Fig.2, or the triple-gate drive structure as shown in Fig.3. As shown in Figs.1-3, in such structure, the number of the gate drive lines will be increased remarkably, and the number of the corresponding gate drive ICs (integrated circuits) will be increased too.

### SUMMARY

An object of embodiments of the present invention is to provide an array substrate, a driving method, and a display deice, so as to reduce the number of gate drive lines, especially for a large-size panel, a dual-gate display panel or a triple-gate display panel.

In one aspect, embodiments of the present invention provide an array substrate, comprising a plurality of gate lines. A first gate line of the two adjacent gate lines is coupled to a first switch unit and a second gate line is coupled to a second switch unit. The first switch unit and the second switch unit are coupled to a control line, and are coupled to a gate drive output channel. The second switch unit is turned off when the first switch unit is turned on under control of the control line, and the first switch unit is turned off when the second switch is turned on under control of the control line.

The first switch unit comprises a first thin film transistor, a gate electrode of the first thin film transistor is coupled to the control line. The second switch unit comprises a NOT gate and a second thin film transistor. An input end of the NOT gate is coupled to the control line and an output end of the NOT gate is coupled to a gate electrode of the second thin film transistor.

Source electrodes of the first and second thin film transistors are coupled to the gate drive output channel. A drain electrode of the first thin film transistor is coupled to the first gate line, and a drain electrode of the second thin film transistor is coupled to the second gate line.

The first switch unit comprises a PMOS transistor, and the second switch unit comprises an NMOS transistor. Gate electrodes of the PMOS transistor and the NMOS transistor are coupled to the control line. Source electrodes of the PMOS transistor and the NMOS transistor are coupled to the gate drive output channel. A drain electrode of the PMOS transistor is coupled to the first gate line, and a drain electrode of the NOMS transistor is coupled to the second gate line.

The first and second gate lines are both coupled to a thin film transistor for a sub-pixel of the array substrate. The thin film transistor for the sub-pixel is further coupled to a data line and a pixel electrode of the array substrate.

The same data line is coupled to the thin film transistor for the sub-pixels with the same color, and the two adjacent data lines are coupled to the thin film transistors for the sub-pixels with different colors. The first gate line is coupled to the thin film transistor for a first sub-pixel of the two adjacent sub-pixels with the same color, and the second gate line is coupled to the thin film transistor for a second sub-pixel of the two adjacent sub-pixels with the same color.

The thin film transistors for the two adjacent sub-pixels with different colors are coupled to the same data line. The first gate line is coupled to the thin film transistor for a first sub-pixel of the two adjacent sub-pixels with different colors, and the second gate line is coupled to the thin film transistor for a second sub-pixel of the two adjacent sub-pixels with different colors.

The thin film transistors for the two adjacent sub-pixels with different colors are coupled to the same data line. The first gate line is coupled to the thin film transistor for the sub-pixels with the same color, and is coupled to the thin film transistor for the first sub-pixel of the two adjacent sub-pixels with different colors. The second gate line is coupled to the thin film transistor for the sub-pixels with the same color, and is coupled to the thin transistor for the second sub-pixel of the two adjacent sub-pixels with different colors.

A time sequence for a control signal output to the first switch unit and the second switch unit via the control line is identical to a time sequence for a vertical clock pulse signal. A control signal from the gate drive output channel has a pulse width twice the vertical clock pulse signal.

In another aspect, embodiments of the present invention further provide a method for driving the above-mentioned array substrate, comprising: outputting a voltage signal to a first switch unit and a second switch unit via a control line, so that when the first switch unit is turned on, the second switch unit is turned off and a voltage signal output via a gate drive output channel is applied to a corresponding thin film transistor for a sub-pixel via a first gate line, or when the second switch unit turned on, the first switch unit is turned off and the voltage signal output via the gate drive output channel is applied to a corresponding thin film transistor for a sub-pixel via a second gate line.

A time sequence for the voltage signal output to the first switch unit and the second switch unit via the control line is identical to that of a vertical clock pulse signal, and the voltage signal from the gate drive output channel has a pulse width twice the vertical clock pulse signal.

In yet another aspect, embodiments of the present invention further provide a display device comprising the above-mentioned array substrate.

The present application has the following advantageous effects.

According to embodiments of the present invention, the first gate line of the two adjacent gate lines is coupled to the first switch unit and the second gate line is coupled to the second switch unit. The first switch unit and the second switch unit are coupled to the same control line, and are coupled to the same gate drive output channel. The second switch unit is turned off when the first switch unit is turned on under the control of the control line, and the first switch unit is turned off when the second switch unit is turned on under the control of the control line. As a result, it is able to reduce the number of the gate drive lines by half when maintaining the number of the original source lines, especially for a large-size panel, a dual-gate display panel or a triple-gate display panel.

### BRIEF DESCRIPTION OF THE DRAWINGS

Fig.1 is a schematic view showing the single-gate drive structure for a traditional liquid crystal panel;
Fig.2 is a schematic view showing the dual-gate drive structure for a traditional liquid crystal panel;
Fig.3 is a schematic view showing the triple-gate drive structure for a traditional liquid crystal panel;
Fig.4 is a schematic view showing a gate drive circuit for a liquid crystal panel according to a first embodiment of the present invention;
Fig.5 is a schematic view showing a first control time sequence for the gate drive circuit of the liquid crystal panel of embodiments of the present invention;
Fig.6 is a schematic view showing a second control time sequence for the gate drive circuit of the liquid crystal panel of embodiments of the present invention;
Fig.7 is a schematic view showing the single-gate drive structure for the liquid crystal panel of embodiments of the present invention;
Fig.8 is a schematic view showing the dual-gate drive structure for the liquid crystal panel of embodiments of the present invention;
Fig.9 is a schematic view showing the triple-gate drive structure for the liquid crystal panel of embodiments of the present invention;
Fig.10 is a schematic view showing a time sequence for a signal from a control line in the gate drive circuit of embodiments of the present invention;
Fig.11 is a schematic view showing a time sequence for a signal from a gate drive output channel in the gate drive circuit of embodiments of the present invention;
Fig.12 is a schematic view showing a time sequence for a signal driven by a pixel according to embodiments of the present invention; and
Fig.13 is a schematic view showing a gate drive circuit for a liquid crystal panel according to a second embodiment of the present invention.

### DETAILED DESCRIPTION

To make the objects, the technical solutions and the advantages of the present invention more apparent, the present invention is described hereinafter in conjunction with the drawings and the embodiments.

Embodiments of the present invention provide an array substrate comprising a plurality of gate lines. A first gate line of the two adjacent gate lines is coupled to a first switch unit, and a second gate line is coupled to a second switch unit. The first switch unit and the second switch unit are coupled to a control line, and are coupled to a gate drive output channel. The second switch unit is turned off when the first switch unit is turned on under the control of the control line, and the first switch unit is turned off when the second switch unit is turned on under the control of the control line.

According to embodiments of the present invention, one control line is used to control the two adjacent gate lines, As a result, it is able to reduce the number of the gate drive lines by half when maintaining the number of the drive lines of the original data lines, especially for a large-size panel, a dual-gate display panel or a triple-gate display panel.

As shown in Fig.4, in the first embodiment, the first switch unit comprises a first thin film transistor (TFT) 11, and a gate electrode B of the first TFT 11 is coupled to a control line 10.

The second switch unit comprises a NOT gate 13 and a second thin film transistor (TFT) 12. An input end of the NOT gate 13 is coupled to the control line 10, and an output end of the NOT gate 13 is coupled to a gate electrode D of the second TFT 12.

In addition, source electrodes A of the first TFT 11 and the second TFT 12 are coupled to the gate drive output channel G1. A drain electrode C of the first TFT 11 is coupled to the first gate line G11, and a drain electrode E of the second TFT 12 is coupled to the second gate line G12.

In the gate drive circuit with the above-mentioned structure, every two adjacent gate lines G11 and G12 are coupled to the gate drive output channel G1 via two additional TFT switches (i.e., the first TFT 11 and the second TFT 12) respectively, and the two TFT switches control the gate electrodes to be turned on or off via a control signal from the control line.

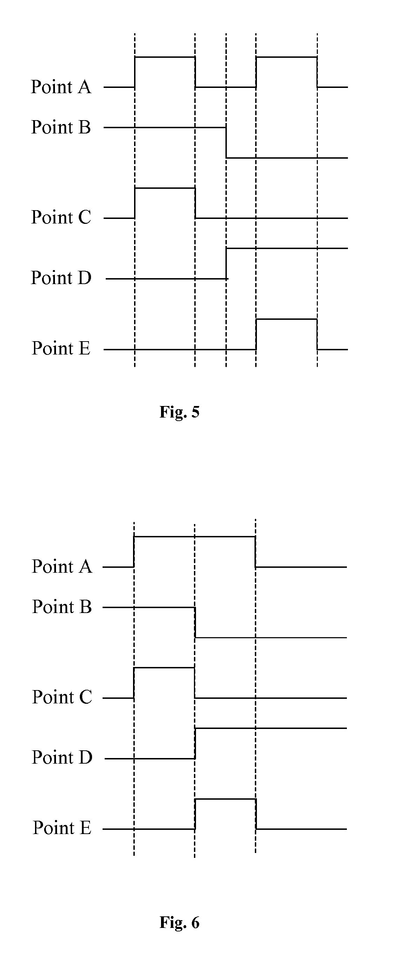

Because the sub-pixels corresponding to the two gate lines need to be turned on sequentially, for the time sequence control, an inverted NOT gate circuit is added between the control signal from the control line corresponding to the sub-pixels in the even-numbered rows and the TFT. As a result, it is able to ensure that the sub-pixels corresponding to the two gate lines can be turned on sequentially according to the control signal from the control line, i.e., with the time sequences at points B (i.e., the gate electrode of the first TFT 11) and D (i.e., the gate electrode of the second TFT 12) as shown in Fig.5 or 6. The time sequence for the control signal from the control line 10 is identical to that at point B.

In the above-mentioned array substrate, the first gate line G11 and the second gate line G12 are coupled to TFTs 21, 22 for sub-pixels (e.g., R, G and B) of the array substrate respectively. Each TFT for the sub-pixel is further coupled to a data line D1 and a pixel electrode of the array substrate.

As shown in Fig.5, gate drive output signals provided at point A (i.e., source or drain electrodes of the two TFT switches) include two signals for turning on the TFT for the sub-pixel, and the two signals represent the two gate drive lines coupled to the TFT.

When the control signal from the control line 10 is a high level signal, the first TFT 11 added in the odd-numbered rows is turned on, and the signal from the gate drive output channel G1 is applied to the gate electrode of the corresponding TFT 21 for the sub-pixel via the gate line G11. When the control signal from the control line 10 is a low level signal, the second TFT 12 added in the even-numbered rows is turned on due to the function of a phase inverting circuit, and the signal from the gate drive output channel G1 is applied to the TFT 22 for the sub-pixels in the even-numbered rows via the gate line G12. As a result, it is able to control two gate lines by one gate drive output channel.

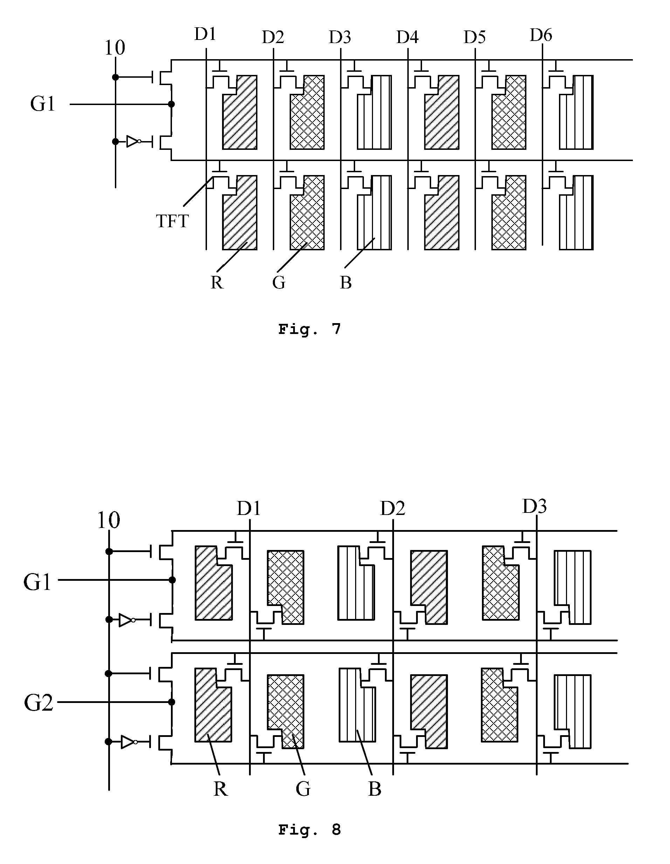

By using such structure, the number of the gate drive ICs may be remarkably reduced as compared with the drive structure for a traditional liquid crystal panel, as shown in Figs.7, 8 and 9.

As shown in Fig.7, in the array substrate, the same data line is coupled to the sub-pixels with the same color, and the two adjacent data lines are coupled to the sub-pixels with different colors. The first gate line is coupled to the thin film transistor for a first sub-pixel of the two adjacent sub-pixels with the same color, and the second gate line is coupled to the thin film transistor for a second sub-pixel of the two adjacent sub-pixels with the same color.

As shown in Fig.8, in the array substrate with the dual-gate drive structure, the same data line is coupled to the sub-pixels with different colors. The first gate line is coupled to the thin film transistor for a first sub-pixel of the two adjacent sub-pixels with different colors, and the second gate line is coupled to the thin film transistor for a second sub-pixel of the two adjacent sub-pixels with different colors.

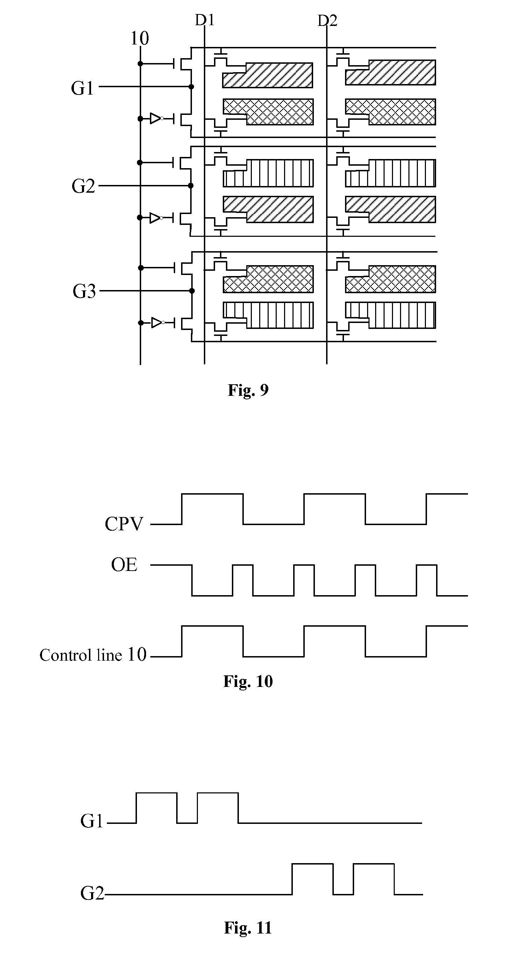

As shown in Fig.9, in the array substrate with the triple-gate drive structure, the same data line is coupled to the sub-pixels with different colors. The first gate line is coupled to the sub-pixels with the same color, and is coupled to the thin film transistor for the first sub-pixel of the two adjacent sub-pixels with different colors. The second gate line is coupled to the sub-pixels with the same color, and is coupled to the thin transistor for the second sub-pixel of the two adjacent sub-pixels with different colors.

As compared with Figs.1, 2 and 3, the number of the gate drive circuits is reduced by half, without changing the structure of the source drive circuit. As a result, it is able to effectively reduce the number of the gate drive ICs and thereby to reduce the cost.

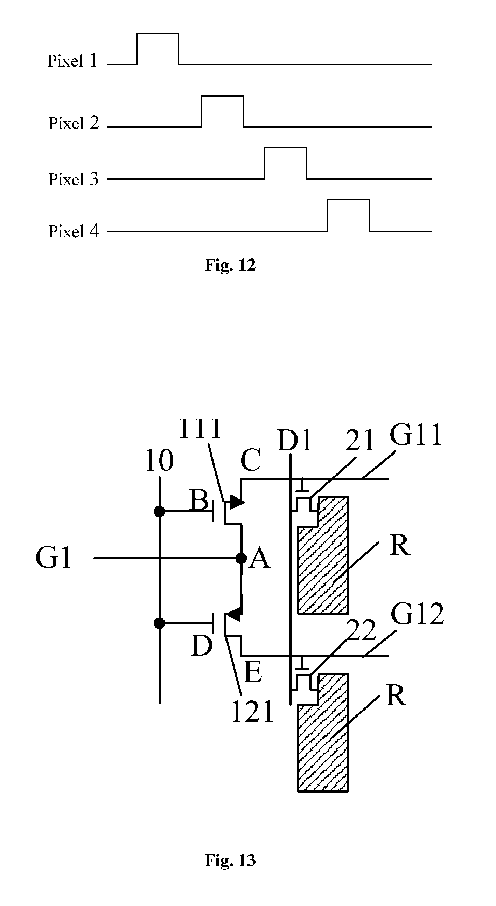

Taking 4 rows of pixels as an example, the time sequence for signals from the drive circuit is shown in Fig.10. The time sequence for a control signal output to the first switch unit and the second switch unit via the control line is identical to a time sequence for a vertical clock pulse signal (CPV signal). CPV signal and OE (output enable) signal are both common gate control signals, and their time sequences may be set in such a manner that the signals from the gate drive output channels G1 and G2 can output a waveform as shown in Fig.11. The time sequence for the control signal from the newly-added control line is set according to the CPV signal and has a phase totally identical thereto. It merely needs to convert the level of the control signal through a level switch, i.e., to convert the control signal to a voltage signal for turning on the TFTs. When the drive circuit is used together with the original circuit on the array substrate, it is able to achieve the time sequence for the signal driven by the pixels as shown in Fig.12, thereby to achieve the same effect as the traditional drive circuit.

Of course, the signal from the gate drive output channel G1 may have the time sequence as that of the signal at point A as shown in Fig.6, and it may have a pulse width twice that of the CPV signal.

To be specific, the original two rows of pixels are controlled as one row of pixels, i.e., the pulse width of the signal at point A is doubled. Two rows of sub-pixels controlled by a signal from an external control line are turned on sequentially, i.e., within a first half of a period, the control signal from the control line is at a high level, and the TFT for the first row of pixels is turned on, while within a second half of the period, the control signal from the control line is converted to be at a low level, and the TFT for the second row of pixels is turned on. As a result, it is also able to reduce the number of the gate drive circuits.

In addition, as shown in Fig.13, in the second embodiment, the first switch unit comprises a PMOS transistor 111, and the second switch unit comprises an NMOS transistor 121. A gate electrode B of the PMOS transistor 111 is coupled to the control line 10, and a gate electrode D of the NMOS transistor 121 is coupled to the control line 10.

Source electrodes A of the PMOS transistor 111 and the NMOS transistor 121 are coupled to the gate drive output channel G1. A drain electrode C of the PMOS transistor is coupled to the first gate line G11, and a drain electrode E of the NMOS transistor is coupled to the second gate line G12.

According to the drive circuit with such a structure, based on the control line, both PMOS transistor and NMOS transistor are used, where the PMOS transistor is located above and the NMOS transistor is located below. When the other rows are turned on, the source electrode at point A is at a low level, which is the same as the gate drive level of the TFT for the sub-pixels, and the operating state thereof will not be affected by the control signal from the control line. When the current line needs to be turned on, a signal at a high level will be output by point A. When the control signal from the control line is at a high level, the PMOS transistor will be turned on, and a threshold voltage at point A will be applied to point C to drive the TFTs for the first row of sub-pixels to be turned on. If the control signal from the control line is at a low level, the PMOS transistor will be turned off and the NMOS transistor is turned on, and the threshold voltage will be applied to point E to drive the TFTs for the second row of sub-pixels to be turned on. According to this drive circuit, the original circuit design is simplified, and the same effect as the first embodiment will be achieved.

Embodiments of the present invention further provide a method for driving the abovementioned array substrate, comprising: outputting a voltage signal to a first switch unit and a second switch unit via a control line, so that when the first switch unit is turned on, the second switch unit is turned off, and a voltage signal output by a gate drive output channel is applied to a corresponding thin film transistor for a sub-pixel via a first gate line, or when the second switch unit turned on, the first switch unit is turned off, and the voltage signal output by the gate drive output channel is applied to a corresponding thin film transistor for a sub-pixel via a second gate line.

A time sequence of the control signal output to the first switch unit and the second switch unit via the control line is identical to that of a vertical clock pulse signal, and the signal from the gate drive output channel has a pulse width twice the CPV signal.

Embodiments of the present invention further provide a display device comprising the abovementioned array substrate. The array substrate may those as shown in Figs.7, 8 or 9, or any other array substrate with a larger size and a higher resolution.

The above are merely the preferred embodiments of the present invention. It should be noted that, a person skilled in the art may further make improvements and modifications without departing from the principle of the present invention, and these improvements and modifications shall also be considered as the scope of the present invention.

## Claims

1. An array substrate, comprising a plurality of gate lines, wherein
a first gate line of the two adjacent gate lines is coupled to a first switch unit and a second gate line is coupled to a second switch unit;
the first switch unit and the second switch unit are coupled to a control line, and are coupled to a gate drive output channel; wherein
the second switch unit is turned off when the first switch unit is turned on under control of the control line, and
the first switch unit is turned off when the second switch is turned on under control of the control line.

2. The array substrate according to claim 1, wherein
the first switch unit comprises a first thin film transistor, a gate electrode of the first thin film transistor is coupled to the control line; and
the second switch unit comprises a NOT gate and a second thin film transistor, an input end of the NOT gate is coupled to the control line, and
an output end of the NOT gate is coupled to a gate electrode of the second thin film transistor.

3. The array substrate according to claim 1 or 2, wherein
source electrodes of the first and second thin film transistors are coupled to the gate drive output channel;
a drain electrode of the first thin film transistor is coupled to the first gate line; and
a drain electrode of the second thin film transistor is coupled to the second gate line.

4. The array substrate according to claim 1, wherein
the first switch unit comprises a PMOS transistor,
the second switch unit comprises an NMOS transistor, and
gate electrodes of the PMOS transistor and the NMOS transistor are coupled to the control line.

5. The array substrate according to claim 1 or 4, wherein
source electrodes of the PMOS transistor and the NMOS transistor are coupled to the gate drive output channel,
a drain electrode of the PMOS transistor is coupled to the first gate line, and
a drain electrode of the NOMS transistor is coupled to the second gate line.

6. The array substrate according to claim 3 or 5, wherein the first and second gate lines are both coupled to a thin film transistor for a sub-pixel of the array substrate, and the thin film transistor for the sub-pixel is further coupled to a data line and a pixel electrode of the array substrate.

7. The array substrate according to claim 6, wherein
the same data line is coupled to the thin film transistor for the sub-pixels with the same color, and the two adjacent data lines are coupled to the thin film transistors for the sub-pixels with different colors,
the first gate line is coupled to the thin film transistor for a first sub-pixel of the two adjacent sub-pixels with the same color, and the second gate line is coupled to the thin film transistor for a second sub-pixel of the two adjacent sub-pixels with the same color.

8. The array substrate according to claim 6, wherein
the thin film transistors for the two adjacent sub-pixels with different colors are coupled to the same data line,
the first gate line is coupled to the thin film transistor for a first sub-pixel of the two adjacent sub-pixels with different colors, and
the second gate line is coupled to the thin film transistor for a second sub-pixel of the two adjacent sub-pixels with different colors.

9. The array substrate according to claim 6, wherein
the thin film transistors for the two adjacent sub-pixels with different colors are coupled to the same data line,
the first gate line is coupled to the thin film transistor for the sub-pixels with the same color, and is coupled to the thin film transistor for the first sub-pixel of the two adjacent sub-pixels with different colors, and
the second gate line is coupled to the thin film transistor for the sub-pixels with the same color, and is coupled to the thin transistor for the second sub-pixel of the two adjacent sub-pixels with different colors.

10. The array substrate according to any one of claims 1 to 9, wherein a time sequence for a control signal output to the first switch unit and the second switch unit via the control line is identical to a time sequence for a vertical clock pulse signal.

11. The array substrate according to claim 10, wherein
a signal from the gate drive output channel has a pulse width twice the vertical clock pulse signal.

12. A method for driving the array substrate according to any one of claims 1 to 11, comprising:
outputting a voltage signal to a first switch unit and a second switch unit via a control line, so that when the first switch unit is turned on, the second switch unit is turned off and a voltage signal output via a gate drive output channel is applied to a corresponding thin film transistor for a sub-pixel via a first gate line, or when the second switch unit turned on, the first switch unit is turned off and the voltage signal output via the gate drive output channel is applied to a corresponding thin film transistor for a sub-pixel via a second gate line.

13. The method according to claim 12, wherein a time sequence for the voltage signal output to the first switch unit and the second switch unit via the control line is identical to that of a vertical clock pulse signal.

14. The method according to claim 13, wherein the voltage signal from the gate drive output channel has a pulse width twice the vertical clock pulse signal.

15. A display device comprising the array substrate according to any one of claims 1 to 11.
